# EUROPEAN PATENT APPLICATION

(11) **EP 1 043 273 A1**
(43) Date of publication of application: **11.10.2000**
(21) Application number: 99204459.4
(22) Date of filing: 22.12.1999
(51) Int. Cl.: C01B 15/037, A23L 2/44, C12H 1/00, A61L 2/22, A23L 3/358

(54) **Hydrogen peroxide solution, method of using said hydrogen peroxide solution and method of producing said hydrogen peroxide solution**

(30) Priority: 08.04.1999 NL 1011755
(71) Applicant: Aqua Consult + Design B.V., 3136 JH Vlaardingen (NL)
(72) Inventor: Bouman, Ing. Frans, 3136 JH Vlaardingen (NL)
(74) Representative: Bakker, Gilles Egbert, Ir.

(57) **Abstract**

The invention relates to a hydrogen peroxide solution, a method of preparing said solution, as well as a method of applying the hydrogen peroxide solution. The solution preferably comprises a stabilized 50%-hydrogen peroxide solution to which a polyalcohol and an organic acid have been added, which can be mannitol and pentanoic acid, hexanoic acid or glycol acid, respectively. By this, usual deterioration time of hydrogen peroxide solutions has been suppressed in such a way, and the action of said solution has been improved in such a way, that this provides a large variety of applications.

## Description

The invention relates to a hydrogen peroxide solution of hydrogen peroxide in water with at least one stabilizer, which is intended to be used for, among other things, preventing contaminations, and to be used as a decontaminant and sterilizer.

Using a hydrogen peroxide solution for disinfectation or sterilization of products such as e.g. packaging goods for food products, pharmaceutical and cosmetics products, but e.g. also disinfectation and thereby preservation of food products per se, is generally known. For sterilizing packaging material we refer to the American Patent Specifications US-A-5 730 934 and US-A-5 843 374, for example, which disclose treatment of the material with a hydrogen peroxide solution followed by exposing it to an ultraviolet radiation. Further, for treatment of food products, we refer to DE-A-24 30 135, for example, which discloses using the hydrogen peroxide for extending the shelf life of milk.

The hydrogen peroxide solutions used to that end are usually stabilized, such as known from e.g. the American Patent Specification US-A-5 609 821. Apart from stabilizing the hydrogen peroxide, the stabilizer known from this document, a very specific organic acid, also provides for that on spraying the solution, the spraying nozzles will not get blocked, at least not immediately.

Although stabilizers are employed, with the use of hydrogen peroxide solutions it remains a problem that nevertheless, they deteriorate relatively quickly. This means that after the disinfecting or sterilizing action of the hydrogen peroxide solution, new bacteriological contaminations will quickly get the possibility to return.

The object of the invention is to provide a hydrogen peroxide solution having a much longer deterioration time of the hydrogen peroxide, but will also be capable of providing for a quick and efficient disinfectation, sterilization, and in which the disinfectation, sterilization can be maintained for a much longer period than could be realized up to now.

Accordingly, according to the invention it is provided for, that the solution further contains at least one polyalcohol. Preferably, it is provided for, that the polyalcohol is mannitol.

Practice has shown that adding mannitol to the solution causes the decomposition of hydrogen peroxide to take place much slower than could be realized up to now, in which it is required that the mannitol be as pure as possible. Tests have proven that concentrated solutions according to the invention deteriorate extremely slowly at room temperature, due to which after 14 days there is stil 99,61% of the starting concentration of hydrogen peroxide in the solution.

The effect of the solution according to the invention can be further improved by adding an organic acid, which, depending on the application of the solution, can e.g. be a pentanoic acid, hexanoic acid, citric acid, lactic acid or glycol acid. Addition of an organic acid is especially important if the solution is employed in fighting fungi.

The hydrogen peroxide solution according to the invention can be applied in various ways, in which, among other things, one could think of spraying, irrigation, immersion, flushing, atomization. Thus, the hydrogen peroxide solutionaccording to the invention can be applied in many different fields, in which one could think of the foodstuffs industry, the processing industry, but also e.g. in the various sanitary spaces in hospitals, and also in toilet, bathroom, kitchen and similar spaces in and around the house.

In the processing industry, the hydrogen peroxide solution can be applied in e.g. cooling-water systems, owing to which pipes can be kept free of growth and bacteriological contaminations, or existing contaminations can be removed from the pipe system. An immediate advantage of this is that an optimum transfer of heat can be guaranteed at all times.

Further, the hydrogen peroxide solution is particularly suitable for being employed in various cleaning and flushing systems, such as used in e.g. breweries, the soft drinks and dairy industry. With use in cleaning and flushing water systems, the water employed can be used for a much longer period than without addition of the solution, which may cause a considerable saving of water, which can easily amount to 75 - 90%.

In the foodstuffs industry, the hydrogen peroxide solution according to the invention can be used both in production and storage of foodstuffs. A further application is e.g. in cooling air in bakeries, slaughterhouses and the like, in order to keep the cooling air bacteriologically clear. Said solution is also particularly suitable for long-term storage of agricultural products such as potatoes, fruits and bulbs, but also for e.g. treating tomatoes, peppers and eggs.

As a further example can be mentioned using the solution in the fishery, e.g. on board of fishing vessels, in which it can be used in cleaning the fish and the crates in which the fish can be stored. A further application is disinfectation of the seawater which is used as coolant for products cooked on board, such as shrimps and cockles.

Further, in the livestock industry, the hydrogen peroxide solution can be used as decontaminant, e.g. in order to prevent and heal claw disorders of sheep, goats and cows.

Finally, as a special application we can mention the use of said hydrogen peroxide solution according to the invention in separating techniques, e.g. of animal manure, in which in a liquid medium, floating particles are expelled and chemically converted into other elements. To this end, the solution is mixed with the animal manure, whereupon the mixture experiences a further treatment and is led along a set of electrodes, in which, apart from the separations a large stream of gas bubbles is produced at the electrodes as well.

On application in several industrial processes, the hydrogen peroxide solution according to the invention can serve as substitute for the chemicals otherwise employed in many of the processes. Employing chemicals has many disadvantages, like corrosive action on the processing equipment or parts thereof, such as e.g. causing excessive wear in case of ionization; the fact that residues of the chemicals remain behind and have to be removed individually, and that the flushing water used therein can represent a burden for the environment; or that additional costs have to be made in order to clean the flushing water again, among other things.

It may be clear that the solution has a very wide area of application, which is in fact possible only by the long-term action of the solution according to the invention. In case of a shorter long-term action, treatments would have to be carried out repeatedly with short intervals, or new solutions would have to be brought into the system repeatedly.

For the solution according to the invention, one preferably starts from a stabilized 50%-solution of hydrogen peroxide, pure mannitol and one or more organic acids. According to a further elaboration, the weight ratio between hydrogen peroxide and mannitol in the solution is preferably between 1:1 and 10:1, and more preferably between 2:1 and 7:1. There, it has been provided for that the solution comprises preferably 10 - 50 percentage by weight of hydrogen peroxide, and more preferably 25 - 35 percentage by weight.

As already indicated, the action of the hydrogen peroxide solution can be further improved by adding an organic acid to the solution, which will preferably be in an amount of 1 - 5 percentage by weight of organic acid.

When the hydrogen peroxide solution is sprayed or atomized, the organic acid can be pentanoic acid or glycol acid, for example, in which a solution according to the invention will be used for preservation of various foodstuffs in particular. Such a solution destroys all possible contaminations, germs, fungi, bacteria, by combustion, without adding any odour or taste to the product, and without colouring the product.

According to a further elaboration, preferably an amount of atomized solution corresponding to 0.1 - 1 gram of hydrogen peroxide per kg of treated product is applied on products to be treated.

After action of the atomized solution on the treated product, the product can, if this would be desirable, additionally be redried with sterile air, said sterile air preferably being at least at room temperature. When drying products such as foodstuffs in this way, these can remain preserved for a long time.

The invention further provides for a method of producing the hydrogen peroxide solution, in which a predetermined amount of mannitol is supplied to a mixing vessel by a powder dose-measuring device, in wich, after achieving said predetermined amount of mannitol, a stirring member will be activated, and subsequently a predetermined amount of hydrogen peroxide will be supplied to said mixing vessel, in which the supply of said hydrogen peroxide solution should be at least 500 ltr/min, and said mixing vessel will be cooled down to below 17°C.

Preferably, amounts of e.g. 1000 units of volume or weight, in which the preparation process should be observed with great accuracy. The velocity at which the hydrogen peroxide is brought into said mixing vessel is essential, since possibly occurring reactions with the hydrogen peroxide solution supplied per unit of time can be suppressed, if necessary.

In case an organic acid should yet be added to the solution, in an amount corresponding to 1 - 5 percentage by weight, similar measures should be taken, since then the explosion limit will be approached as well.

When preparing a solution with glycol acid as added organic acid, first a predetermined amount of glycol acid is added to a predetermined amount of mannitol, whereupon the mixture of mannitol and glycol acid is added to a predetermined amount of hydrogen peroxide solution with the help of a mixing member, in which said mixing member and/or the mixing vessel into which the solution lands, are cooled down to 17°C.

Finally, when making dilutions of said solutions it is particularly important that the process system has been sufficiently cleaned, whereupon the amount of demineralized and/or distilled water required for the dilutions will be brought into a cooled mixing vessel, the temperature of the water will be lowered to approximately 4°C, subsequently the mixing member will be activated and the desired amount of the previously prepared specific hydrogen peroxide solution will be brought into said mixing vessel. Both liquids to be mixed must have an equal temperature of ± 4°C, in which maintaining the temperature indicated gives rise to a stable mixture having a dilution of 1 - 10% at the most.

## Claims

1. Hydrogen peroxide solution of hydrogen peroxide in water with at least one stabilizer, which is intended to be used for, among other things, preventing contaminations, and to be used as a decontaminant and sterilizer, characterized in that the solution further contains at least one polyalcohol.

2. Hydrogen peroxide solution according to claim 1, characterized in that the polyalcohol is mannitol.

3. Hydrogen peroxide solution according to claim 2, characterized in that the solution further contains at least one organic acid.

4. Hydrogen peroxide solution according to claim 3, characterized in that the organic acid is hexanoic acid.

5. Hydrogen peroxide solution according to claim 3, characterized in that the organic acid is pentanoic acid, citric acid, lactic acid or glycol acid.

6. Hydrogen peroxide solution according to the claims 2 - 5, characterized in that the weight ratio between hydrogen peroxide and mannitol in the solution is preferably between 1:1 and 10:1, and more preferably between 2:1 and 7:1.

7. Hydrogen peroxide solution according to the claims 2 - 6, characterized in that the solution comprises preferably 10 - 50 percentage by weight of hydrogen peroxide, and more preferably 25 - 35 percentage by weight of hydrogen peroxide.

8. Hydrogen peroxide solution according to the claims 3 - 7, characterized in that the solution contains 1 - 5 percentage by weight of organic acid.

9. Method of disinfecting, sterilizing of products and spaces, in which a hydrogen peroxide solution is atomized, characterized in that a hydrogen peroxide solution with mannitol and at least glycol acid is employed, the weight ratio between hydrogen peroxide and mannitol in the solution being preferably between 1:1 and 10:1, and more preferably between 2:1 and 7:1, that said solution contains preferably 10 - 50 percentage by weight of hydrogen peroxide, and more preferably 25 - 35 percentage by weight, and that said solution contains 1 - 5 percentage by weight of glycol acid.

10. Method according to claim 9, characterized in that said solution is atomized to a concentration of 0.001 - 0.01 percentage by volume within a sealed space.

11. Method according to claim 9, characterized in that an amount of atomized solution corresponding to 0.1 - 1 gram of hydrogen peroxide per kg of treated product is applied on products to be treated.

12. Method according to claim 11, characterized in that after action of the atomized hydrogen peroxide solution, said products can be dried with sterile air.

13. Method according to claim 12, characterized in that said sterile air is heated to at least 23°C.

14. Method of producing the hydrogen peroxide solution, in which a predetermined amount of mannitol is supplied to a mixing vessel by a powder dose-measuring device, in wich, after achieving said predetermined amount of mannitol, a stirring member will be activated, and subsequently a predetermined amount of hydrogen peroxide will be supplied to said mixing vessel, in which the supply of said hydrogen peroxide solution should be at least 500 ltr/min, and said mixing vessel will be cooled down to below 17°C.

15. Method according to claim 14, characterized in that after preparation of the solution, 1 - 5 percentage by weight of organic acid is added to said solution.

16. Method of preparing a solution according to one or more of the claims 1 - 8, characterized in that a predetermined amount of glycol acid is added to a predetermined amount of mannitol, and mixed with it, whereupon the mixture of mannitol and glycol acid will be added to a predetermined amount of hydrogen peroxide solution with the help of a mixing member, in which said mixing member and/or said mixing vessel into which the solution lands, are cooled down to below 8°C.

17. Method according to claims 14 - 16, characterized in that for dilutions of said solutions, demineralized water will be brought into a cooled mixing vessel, the temperature of the demineralized water will be lowered to approximately 4°C, subsequently the mixing member will be activated and the desired amount of the previously prepared solution will be brought into said mixing vessel.
